# EUROPEAN PATENT SPECIFICATION

(11) **EP 3 436 788 B1**
(45) Date of publication and mention of the grant of the patent: **26.02.2020**
(21) Application number: 16714373.4
(22) Date of filing: 31.03.2016
(51) Int. Cl.: G01F 1/66

(54) **METHOD FOR SAMPLING AN ULTRASONIC SIGNAL AND SYSTEM FOR SAMPLING AN ULTRASONIC SIGNAL**
VERFAHREN ZUR ABTASTUNG EINES ULTRASCHALLSIGNALS UND SYSTEM ZUR ABTASTUNG EINES ULTRASCHALLSIGNALS
PROCÉDÉ D'ÉCHANTILLONNAGE DE SIGNAL ULTRASONORE ET SYSTÈME D'ÉCHANTILLONNAGE DE SIGNAL ULTRASONORE

(43) Date of publication of application: 06.02.2019
(73) Proprietor: Danfoss A/S, 6430 Nordborg (DK)
(72) Inventor: JESPERSEN, Lars, 6400 Sønderborg (DK); STÆR, Torben, 6400 Sønderborg (DK); STEFFENSEN, Henrik Bork, 6400 Sønderborg (DK)
(74) Representative: Petersen, Frank
(86) International application number: PCT/EP2016/057099
(87) International publication number: WO 2017/167378

(56) References cited:
- WO-A1-2013/079074
- WO-A1-2014/080303
- WO-A2-2012/055413
- US-A1- 2014 107 950
- Moshe Mishali ET AL: "Sub-Nyquist Sampling: Bridging Theory and Practice", , 22 June 2011 (2011-06-22), XP055322811, Retrieved from the Internet: URL:https://arxiv.org/pdf/1106.4514v1.pdf [retrieved on 2016-11-24]

## Description

The invention relates to a method for sampling an ultrasonic signal, according to the preamble of claim 1.

The invention furthermore relates to a system for sampling an ultrasonic signal that is structured and arranged to perform the method.

Such a method is known, for example, from WO 2012/055 413 A2. The two ultrasonic transducers can both be used alternatively as transmitter and receiver.

Moshe Mishali ET AL: "Sub-Nyquist Sampling: Bridging Theory and Practice" discloses a periodic non-uniform sampling at Sub-Nyquist sampling rate.

Systems of ultrasonic transducers are, for example, used in ultrasonic flow meters to detect the flow speed in a fluid path, e.g. a water line. To this end it is known to arrange two ultrasonic transducers in a fluid path to send and receive ultrasonic signals from each other to calculate, for example, the flow speed through the fluid line by detecting the difference in the arrival time of ultrasonic signals sent from a first transducer to the second transducer and vice versa. Because of the size and geometry of ultrasonic transducers used for this purpose the frequency range of ultrasonic signals is usually in the MHz range. At the same time the analog-to-digital converters integrated in low-cost microcontrollers do not have a sufficiently high conversion rate to be able to sample a signal of such a high frequency above the Nyquist sample rate. Consequently, the control unit of such ultrasonic systems are usually only able to reconstruct the received signal by using calculation intensive signal processing.

Alternatively, more complicated and expensive control units and in particular analog-to-digital converters can be used to completely reconstruct the signal and, for example, run diagnostic on the ultrasonic system based on a comparison of the over-sampled transmit and receive signals. For example, one may check if the connections between the control unit and the ultrasonic transducers are correctly set up and the signal paths are working correctly. However, such solutions are rather expensive and normally only used in industrial types of flow meters, for testing a new ultrasonic system or during maintenance to find a fault of an existing older system with a control unit that is only able to undersample the signal or that does not use signal sampling at all.

From US 2014/0318268 A1 an ultrasonic flow meter using undersampling is known. Therein, it is suggested to perform signal analysis on an undersampled received signal to improve the accuracy of the deduced time difference between arrivals of signals sent in opposite directions. This way, the flow speed can be calculated from the signal difference to a higher accuracy. However, this solution does still not provide a proper digitization of the received signal and therefore can, for example, not be used to perform an effective diagnosis on the transmit and receive signals.

The task of the present invention is therefore to provide a method for sampling an ultrasonic signal as well as a system for sampling an ultrasonic signal that allows to reconstruct the received signal to a higher time resolution without increasing the costs of the system.

According to the present invention the above task is solved by a method comprising the steps:
a) Sending an input electric signal from the control unit to a first ultrasonic transducer, transforming the input electric signal to an ultrasonic signal and sending it to a second ultrasonic transducer through the flow path,
b) transforming the received ultrasonic signal at the second ultrasonic transducer to an output electric signal that is sent to the control unit,
c) sampling the output electric signal received at the control unit to a series of digital samples at a sampling frequency,
d) repeating steps a) to c) at least once with the same input electric signal, wherein in step c) the time of a start of the sampling measured from the time of start of the respective input electric signal and/or the sampling frequency is different from the previous sampling,
e) combining the obtained series of samples to obtain a combined digital output signal.

A sample here denotes a single value in the digitalization and a series of samples denotes a number of samples obtained in each repetition of step c). The above solution allows to use relatively slow analog-to-digital converters that have a sampling frequency that only allows an undersampling of the received output electric signal. By repeating the sending, receiving and sampling operations at least once, preferably numerous times, using the same input electric signal it is possible to obtain a combined digital output signal that has an effective sampling frequency that is much higher than the sampling frequency provided by the used analog-to-digital converters. This solution is applicable because neither the state of the fluid in the fluid path nor the setup of the ultrasonic system will change significantly if the steps a) to c) of the method are repeated in a sufficiently short overall time interval. Usually it is possible to perform a large number of repetitions within tens of milliseconds. Each series of samples then gives information about other points of the signal curve and when all obtained series of samples are combined the output electric signal can be reconstructed in a combined digital output signal to a high accuracy. Transmit signal in the context of the application means the signal that has passed the transmitting ultrasonic transducer. The transmit signal is usually different from the input electric signal since it is already influenced by the characteristics of the transmitting ultrasonic transducer. Similarly, the receive signal denotes the signal that has passed the receiving ultrasonic transducer.

Furthermore, the resulting high resolution digital output signal also allows to achieve a high accuracy at a lower computational effort, for example if the sampling method is used in an ultrasonic system for measuring the flow speed of the fluid in the fluid path. In this case, the sampling method would be used one time for the first direction from the first ultrasonic transducer to the second ultrasonic transducer and afterwards a second time for the opposite direction from the second ultrasonic transducer to the first ultrasonic transducer. This way two high resolution digital output signals could be obtained which allow to deduce the difference in arrival times to a higher accuracy and consequently measure, for example, the flow speed more accurately.

There are two ways to ensure that the different sets of samples map different parts of the output electric signal. The time of start of the sampling measured from the time of start of the respective input electric signal may be changed for each subsequent repetition of steps a) to c). This can be performed at a constant sampling frequency but this is not necessary. Alternatively or additionally the sampling frequency may be changed for each repetition of the steps a) to c). This way, one may still obtain a high resolution in the combined digital output signal.

It is preferred if the sampling frequency for each sampling is the same. Preferably the highest sampling frequency available to the analog-to-digital converter is used in this case. One may thus achieve the highest resolution for the resulting combined digital output signal with the least number of repetition steps.

Preferably, the difference in the time of start of the sampling of each subsequent series of samples is 1/(N-fs), where N is the number of series of samples performed and fs is the sampling frequency. With this solution it is ensured that the complete output electric signal is mapped by the combined series of samples with a constant time difference between each sample in the combined digital output signal. Thus, the resolution of the digital output signal is constant.

It is preferred if the number of samples in each series of samples is larger than the duration of the receive signal times the respective sampling frequency of the series of samples. In particular if the time of start of the sampling measured from the time of start of the respective input electric signal is changed relative to the previous sampling one can ensure that each set of samples will still cover most or all of the output electric signals. The sampling may then in each case also be started prior to the arrival of the ultrasonic signal at the second ultrasonic transducer. Preferably, the number of samples in each series of samples is at least twice as a large as the duration of the receive signal times the respective sampling frequency of the series of samples.

It is preferred if the sampling frequency for all series of samples is lower than the Nyquist rate of the input electric signal. The Nyquist rate is twice the bandwidth of the input electric signal. In this case, relatively inexpensive analog-to-digital converters can be used in the control unit. The sampling frequency for all series of samples can be lower than one million samples per second.

It is preferred if the combined digital output signal is compared to the input electric signal to diagnose the connection between the ultrasonic transducers and the control unit. In this case, the sampling method can be used to detect an error in the signal path between the ultrasonic transducers and the control unit by comparing the input electric signal to the combined digital output signal. Comparing the signals here does not necessarily mean a direct comparison of the signals (which may require a high amount of signal processing). One does not necessarily need to compare the input electric signal directly to the combined digital output signal. One may for example compare known representative quantities of the input electric signal to the combined digital output signal or to representative quantities of the combined digital output signal. Alternatively, representative quantities of a combined digital output signal and the combined digital input signal are compared for a diagnosis of the system. For example during calibration and accredited verification of a flow meter in a flow rig, the method can be used for a test of the fully assembled flow meter on site. It is not necessary to have additional testing equipment installed which would be unpractical since the flow meter would then have to be partially demounted and remounted afterwards. Consequently it would also not allow a full verification after final assembly of the flow meter. This is a further advantage of the sampling method according to the invention since the system itself can be diagnosed without having to install additional test equipment.

It is furthermore preferred if the steps a) to e) are repeated in the opposite signal direction, and wherein the two resulting combined digital output signals are compared. The opposite signal direction here means the direction from the control unit to the second ultrasonic transducer, to the first ultrasonic transducer and then back to the control unit. In this case the sampling method can be used for the normal operation of a system comprising two ultrasonic transducers and a control unit, for example an ultrasonic flow meter. The comparison of the two resulting combined digital output signals will then result in a measurement, for example, of the flow speed to a much higher accuracy. The comparison can alternatively or additionally also be used to perform signal path analysis during normal operation. The signal analysis may comprise the use of a fast Fourier transform and/or a discrete time Fourier transform.

It is preferred if the flow speed of the fluid is calculated from the difference of the two combined digital output signals. "Difference" here can for example mean time difference of arrival of the signals or the phase shift between the combined digital output signals sent in the opposite directions. In addition to the diagnostic advantages of the sampling method one may then furthermore use the sampling method in the normal operation of an ultrasonic flow meter to detect the flow speed of a fluid with a high accuracy. Being able to digitize the received signal with a higher resolution can also allow to more precisely calculate the arrival time difference of the ultrasonic signals in opposite directions and may improve the accuracy of the flow speed measurement. Furthermore, a higher resolution of the digitized received and/or transmitted signals can also allow to reduce the amount of signal processing necessary to detect a faulty signal path or to achieve a high accuracy of the flow speed measurement.

Preferably, the transmit signal is digitally sampled at least twice, wherein in each repetition of the sampling the time of start of the sampling measured from the time of start of the respective transmit signal and/or the sampling frequency is different from the previous sampling, and the obtained series of samples are combined to obtain a combined digital input signal. Each sampling repetition may either be performed before sending the transmit signal to the first ultrasonic transducer and then again performed in the next repetition of steps a) to c) or all series of samples can be obtained one after another before sending the first transmit signal to the first ultrasonic transducer. This digitization of the transmit signal can of course also be performed if signals are sent in opposite signal directions for example if the sampling method is used during normal operation of the system for example as a flow meter. From comparing the combined digital input signal to the combined digital output signal it is then possible to perform a detailed analysis of the ultrasonic system and, for example, to diagnose a faulty signal path or electrical connection or to detect an incorrect installation of the ultrasonic system in the fluid path. Different characteristics of the combined digital input and output signals can then hint to different problems, e. g. in the signal path. The transmit signal can be repeatedly sampled inside the electronics using the same sampling steps as for the receive signal. The transmit signal can either be sampled before the start of each repetition of steps a) to c) or a number of sampling repetition can be performed before sending the transmit signal the first time to the first ultrasonic transducer. Sampling repetitions here means that the transmit signal is also digitized using interleaved under sampling. The sampling or the transmit signal can be performed either on the direct transmit signal or on a signal derived from the transmit signal, e. g. from a transmitter stage of the control unit. When sampling the transmit signal the same method for interleaving the sampling maybe used as for the receive signal, i. e. the time of start of the sampling of the receive signal and/or the sampling frequency can be changed for each subsequent sampling of the transmit signal. Similarly a combined digital input signal can be obtained by combining the obtained series of samples of the transmit signal.

The above task is also solved by a system for sampling an ultrasonic signal comprising two ultrasonic transducers that are arranged in a fluid path to transmit ultrasonic signals to and receive signals from each other, and wherein a control unit is arranged to send electric signals to each of the ultrasonic transducers to be transformed into ultrasonic signals, and wherein the control unit is arranged to receive electric signals from both ultrasonic transducers transformed from ultrasonic signals, and wherein the control unit comprises an analog-to-digital converter to convert received electric signals from the ultrasonic transducers, characterized in that the system is structured and arranged to perform the method according to any of the above embodiments. In particular the control unit is arranged to repeat steps a) to c) of the above method at least once, preferably numerous times, to receive combined digital output signals from several series of samples obtained from repeated sending and receiving of the same input electric signal.

It is preferred if the analog-to-digital converter has an analog bandwidth that is larger than the frequency of the input electric signal. This allows to use the analog-to-digital converter for the above described sequential interleaved undersampling of relatively high frequency ultrasonic signals up to the analog bandwidth of the analog-to-digital converter.

Preferably, the analog-to-digital converter has an analog bandwidth that is larger than 10 MHz. A common frequency for transmit and receive signals of ultrasonic flow meters is in the range of 0,5 to 5 MHz. With an analog bandwidth of more than 10 MHz of the analog-to-digital converter one may therefore perform the above described sequential interleaved undersampling of such high frequency ultrasonic signals. However, it is in principle sufficient if the analog bandwidth of the analog-to-digital converter is at least equal to the signal bandwidth.

Preferably, the input electric signal has a frequency of 0,5 to 5 MHz. With an input electric signal of such a frequency range the analog-to-digital converter should have a sufficiently larger analog bandwidth, preferably in excess of 10 MHz to avoid attenuation of the signal to be sampled.

Preferred embodiments of the invention will now be described with reference to the figures, wherein:
- Fig. 1: shows a system for sampling an ultrasonic signal according to the invention,
- Fig. 2: shows parts the method for sampling an ultrasonic signal according to the invention.

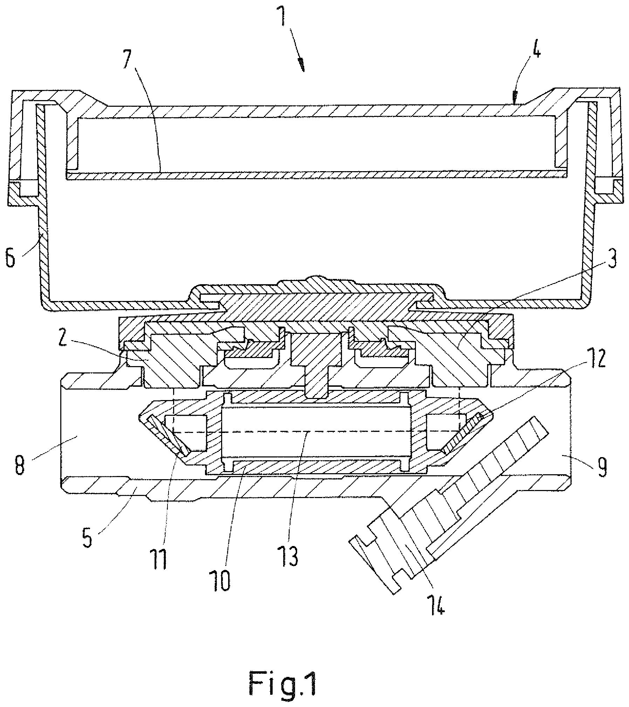

Fig. 1 shows a system 1 for sampling an ultrasonic signal comprising a first ultrasonic transducer 2, a second ultrasonic transducer 3 as well as a control unit 4. The first ultrasonic transducer 2 and the second ultrasonic transducer 3 are attached to a fluid line 5, in this case a spool piece. The fluid line 5 may also be a fluid pipe or a fluid section with a more general shape. Furthermore, the ultrasonic transducers 2, 3 are connected to the control unit 4, such that the ultrasonic transducers can receive electric signals from and send electric signals to the control unit 4.

The control unit 4 is here shown simplified with a housing 6 as well as an electronic component 7, in this case a printed circuit board. The analog-to-digital converter can be part of the electronic component 7.

The fluid line 5 comprises a flow inlet 8 as well as a flow outlet 9. A flow liner 10 is arranged in the fluid line 5. A system 1 furthermore comprises sound reflectors 11, 12 arranged in the fluid line 5. The flow liner 10 and the sound reflectors 11, 12 provide a sound path 13 through a fluid path in the fluid line 5.

In this embodiment the system 1 also comprises a temperature sensor 14 arranged in the fluid line 5. The temperature sensor 14 can, for example, be used in conjecture with the flow speed measurement. To deduce the flow speed it is usually necessary to know the temperature from which the speed of sound of the fluid can be calculated. The temperature dependent speed of sound of the fluid is an input for the calculation of the flow speed reduced from the difference of the arrival times of the signals sent in opposite directions.

During operation of the system an input electric signal is, for example, sent from the control unit 4 to the first ultrasonic transducer 2. There the input electric signal is transformed to an ultrasonic signal and sent into the fluid path towards the sound reflector 11. There the ultrasonic signal is reflected along the sound path 13 towards the sound reflector 12 where it is reflected towards the second ultrasonic transducer 3. The second ultrasonic transducer 3 transforms the ultrasonic signal to an output electric signal that is sent to the control unit 4. The output electric signal received at the control unit 4 is sampled to a first series of digital samples at a sampling frequency. The above described sending and receiving steps are repeated at least once during operation, preferably numerous times, to obtain a large number of series of samples that can be combined to a digital output signal with a higher effective sampling frequency than each individual series of samples. Consequently, analog-to-digital converters can be used that have a relatively low maximum sampling frequency (e.g. below one million samples per second) and still ultrasonic signals with a relatively high frequency can be sampled and resolved.

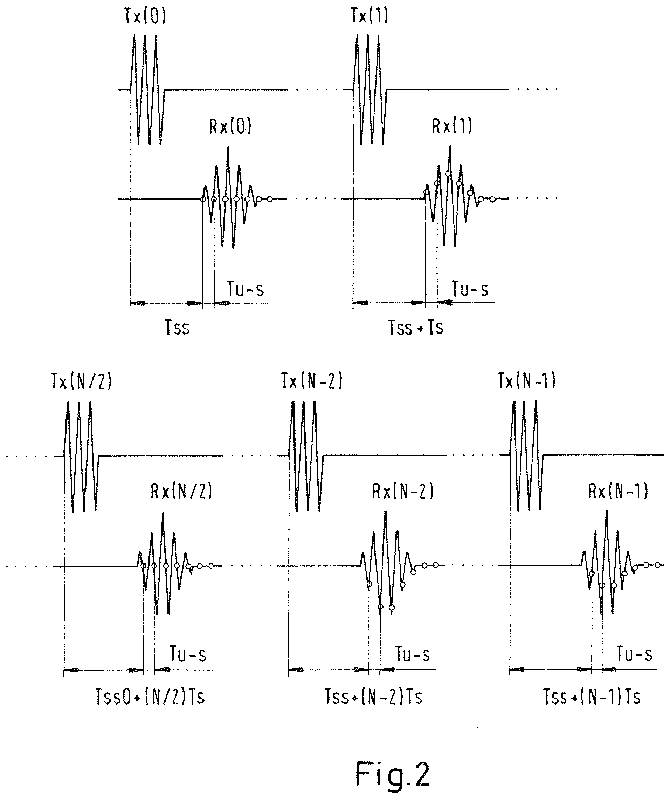

An example of such a combined interleaved undersampling is explained with reference to Fig. 2. Here the upper signal curves show the transmitted signal denoted with Tx, and lower signal curves show the received signal denoted with Rx. The number in the parenthesis denotes the current number of the repetition of steps a) to c) of the method according to claim 1. In this example the interleaved undersampling is performed by adding a time delay between the start of each set of samples compared to the previous sampling. Tss here denotes the time from start of the transmitted signal Tx to the start of the sampling of Rx. In the given embodiment of the sampling method for each subsequent repetition of steps a) to c) an additional time delay Ts for the start of the sampling is added. Overall N number of sampling series are performed on a repeatedly sent identical input electric signal.

The sampling is depicted in a simplified manner by small circles on the received signals Rx. The period Tu-s and consequently the sampling frequency of the sampling is in this embodiment the same for each sampling operation of the received signal. Additionally or alternatively alternatively one may also change the sampling frequency to allow an improved mapping of the received signal such that the combined digital output signal will have a sufficiently high time resolution.

As one can see in the given example a simple singular sampling of the received signal would not result in a proper representation of the received output electric signal because the sampling frequency is too low to properly resolve the received signal Rx from each series of samples alone.

In the given embodiment the difference in time of start of the sampling of each subsequent series of samples is 1/(N·fs), where N is the number of series of samples performed in the given set of samples and fs is the sampling frequency. This way one may ensure that the received signal Rx can be sampled with a homogenous distribution of sampling points in the combined digital output signal.

Consequently, the provided method for sampling an ultrasonic signal and the system for sampling an ultrasonic signal allows to sample an ultrasonic signal with a high time resolution without the need for expensive analog-to-digital converters with very high sampling frequencies. The use of the sampling method allows to perform a sophisticated diagnosis of the ultrasonic system directly on site after installation, or during operation. It is not necessary to use additional diagnostic equipment, but the system is able to detect faulty signal paths and other problems from the shape and quality of the combined digital output signal. In the state of the art the digital output signal did not have sufficient resolution in the known flow meters to perform an advanced signal path diagnosis or a detailed error analysis of the electronics.

Furthermore, the sampling method also allows to obtain high resolution measurements with low computational effort for signal analysis. For example, one can accurately obtain of the flow speed if the system is used as an ultrasonic flow meter.

## Claims

1. Method for sampling an ultrasonic signal, wherein two ultrasonic transducers (2, 3) are arranged in a fluid path to transmit ultrasonic signals to and receive ultrasonic signals from each other, and wherein a control unit (4) is arranged to send electric signals to each of the ultrasonic transducers (2, 3) to be transformed into ultrasonic signals, and wherein the control unit (4) is arranged to receive electric signals from both ultrasonic transducers (2, 3) transformed from ultrasonic signals, and wherein the control unit (4) comprises an analog-to-digital converter to convert electric signals from the ultrasonic transducers (2, 3), wherein the method comprises the steps:
a) Sending an input electric signal from the control unit (4) to a first ultrasonic transducer (2), transforming the input electric signal to an ultrasonic signal and sending it to a second ultrasonic transducer (3) through the flow path,
b) transforming the received ultrasonic signal at the second ultrasonic transducer (3) to an output electric signal that is sent to the control unit (4),
c) sampling the output electric signal received at the control unit to a series of digital samples at a sampling frequency,
d) repeating steps a) to c) at least once with the same electric input electric signal, **characterized in that** in step c) the time of start of the sampling measured from the time of start of the respective input electric signal and/or the sampling frequency is different from the previous sampling,
e) combining the obtained series of samples to obtain a combined digital output signal.

2. Method according to claim 1, wherein the sampling frequency for each sampling is the same.

3. Method according to claim 1 or 2, wherein the difference in the time of start of the sampling of each subsequent series of samples is 1/(N·fs), where N is the number of series of samples performed and fs is the sampling frequency.

4. Method according to any of claims 1 to 3, wherein the number of samples in each series of samples is larger than the duration of the receive signal times the respective sampling frequency of the series of samples.

5. Method according to any of claims 1 to 4, wherein the sampling frequency for all series of samples is lower than the Nyquist rate of the input electric signal.

6. Method according to any of claims 1 to 5, wherein the combined digital output signal is compared to the input electric signal to detect a faulty signal path between the ultrasonic transducers (2, 3) and the control unit (4).

7. Method according to any of claims 1 to 6, wherein the steps a) to e) are repeated in the opposite signal direction, wherein the two resulting combined digital output signals are compared.

8. Method according to claim 7, wherein the flow speed of the fluid is calculated from the difference of the two combined digital output signals.

9. Method according to any of claims 1 to 8, wherein the transmit signal is digitally sampled at least twice, wherein in each repetition of the sampling of the transmit signal the time of start of the sampling measured from the time of start of the respective transmit signal and/ or the sampling frequency is different from the previous sampling of the transmit signal, and the obtained series of samples are combined to obtain a combined digital input signal.

10. A system for sampling an ultrasonic signal comprising two ultrasonic transducers (2, 3) that are arranged in a fluid path to transmit ultrasonic signals to and receive ultrasonic signals from each other, and wherein the control unit (4) is arranged to send electric signals to each of the ultrasonic transducers (2, 3) to be transformed into ultrasonic signals, and wherein the control unit (4) is arranged to receive electric signals from both ultrasonic transducers transformed from ultrasonic signals, and wherein the control unit comprises an analog-two-digital converter to convert received electric signals from the ultrasonic transducers (2, 3), **characterized in that** the system (1) is structured and arranged to perform the method according to any of claims 1 to 9.

11. The system according to claim 10, **characterized in that** the analog-to-digital converter has an analog bandwidth that is larger than the frequency of the input electric signal.

12. The system according to claim 10 or 11, **characterized in that** the analog-to-digital converter has an analog bandwidth that is larger than 10 MHz.

13. The system according to any of claims 10 to 12, **characterized in that** the input electric signal has a frequency of 0,5 to 5 MHz.

## Patentansprüche

1. Verfahren zur Abtastung eines Ultraschallsignals, wobei zwei Ultraschallwandler (2, 3) in einem Fluidweg angeordnet sind, um Ultraschallsignale zueinander zu senden und Ultraschallsignale voneinander zu empfangen, und wobei eine Steuereinheit (4) eingerichtet ist, um elektrische Signale an jeden der Ultraschallwandler (2, 3) zu senden, um in Ultraschallsignale umgewandelt zu werden, und wobei die Steuereinheit (4) eingerichtet ist, um aus Ultraschallsignalen umgewandelte elektrische Signale von beiden Ultraschallwandlern (2, 3) zu empfangen, und wobei die Steuereinheit (4) einen Analog-Digital-Wandler umfasst, um elektrische Signale von den Ultraschallwandlern (2, 3) umzuwandeln, wobei das Verfahren die folgenden Schritte umfasst:
a) Senden eines elektrischen Eingangssignals von der Steuereinheit (4) an einen ersten Ultraschallwandler (2), der das elektrische Eingangssignal in ein Ultraschallsignal umwandelt, und dieses durch den Fließweg an einen zweiten Ultraschallwandler (3) sendet,
b) Umwandeln des empfangenen Ultraschallsignals am zweiten Ultraschallwandler (3) in ein elektrisches Ausgangssignal, das an die Steuereinheit (4) gesendet wird,
c) Abtasten des an der Steuereinheit empfangenen elektrischen Ausgangssignals in eine Reihe digitaler Abtastwerte bei einer Abtastfrequenz,
d) mindestens einmaliges Wiederholen der Schritte a) bis c) mit demselben elektrischen Eingangssignal, **dadurch gekennzeichnet, dass** sich bei Schritt c) der Startzeitpunkt der Abtastung, gemessen ab dem Startzeitpunkt des entsprechenden elektrischen Eingangssignals, und/oder die Abtastfrequenz von der vorhergehenden Abtastung unterscheidet,
e) Kombinieren der erlangten Reihe von Abtastungen, um ein kombiniertes digitales Ausgangssignal zu erlangen.

2. Verfahren nach Anspruch 1, wobei die Abtastfrequenz für jede Abtastung dieselbe ist.

3. Verfahren nach Anspruch 1 oder 2, wobei die Differenz bei dem Startzeitpunkt der Abtastung jeder darauf folgenden Reihe von Abtastungen 1/(N·fs) beträgt, wobei N die Anzahl der durchgeführten Abtastungsreihen und fs die Abtastfrequenz ist.

4. Verfahren nach einem der Ansprüche 1 bis 3, wobei die Anzahl der Abtastungen in jeder Reihe von Abtastungen größer ist als die Dauer des Empfangssignals mal der jeweiligen Abtastfrequenz der Reihe von Abtastungen.

5. Verfahren nach einem der Ansprüche 1 bis 4, wobei die Abtastfrequenz für alle Reihen von Abtastungen kleiner ist als die Nyquist-Rate des elektrischen Eingangssignals.

6. Verfahren nach einem der Ansprüche 1 bis 5, wobei das kombinierte digitale Ausgangssignal mit dem elektrischen Eingangssignal verglichen wird, um einen gestörten Signalweg zwischen den Ultraschallwandlern (2, 3) und der Steuereinheit (4) zu erkennen.

7. Verfahren nach einem der Ansprüche 1 bis 6, wobei die Schritte a) bis e) in der Gegenrichtung des Signals wiederholt werden, und wobei die zwei sich ergebenden kombinierten digitalen Ausgangssignale verglichen werden.

8. Verfahren nach Anspruch 7, wobei die Strömungsgeschwindigkeit des Fluids aus der Differenz der beiden kombinierten digitalen Ausgangssignale berechnet wird.

9. Verfahren nach einem der Ansprüche 1 bis 8, wobei das Sendesignal mindestens zweimal digital abgetastet wird, wobei sich bei jeder Wiederholung der Abtastung des Sendesignals der Startzeitpunkt der Abtastung, gemessen ab dem Startzeitpunkt des jeweiligen Sendesignals, und/oder die Abtastfrequenz von der vorhergehenden Abtastung des Sendesignals unterscheidet, und wobei die erlangten Reihen von Abtastungen kombiniert werden, um ein kombiniertes digitales Eingangssignal zu erlangen.

10. System zur Abtastung eines Ultraschallsignals, welches zwei Ultraschallwandler (2, 3) umfasst, die in einem Fluidweg angeordnet sind, um Ultraschallsignale zueinander zu senden und Ultraschallsignale voneinander zu empfangen, und wobei die Steuereinheit (4) eingerichtet ist, um elektrische Signale an jeden der Ultraschallwandler (2, 3) zu senden, um in Ultraschallsignale umgewandelt zu werden, und wobei die Steuereinheit (4) eingerichtet ist, um aus Ultraschallsignalen umgewandelte elektrische Signale von beiden Ultraschallwandlern zu empfangen, und wobei die Steuereinheit einen Analog-Digital-Wandler umfasst, um von den Ultraschallwandlern (2, 3) empfangene elektrische Signale umzuwandeln, **dadurch gekennzeichnet, dass** das System (1) konstruiert und eingerichtet ist, um das Verfahren nach einem der Ansprüche 1 bis 9 auszuführen.

11. System nach Anspruch 10, **dadurch gekennzeichnet, dass** der Analog-Digital-Wandler eine analoge Bandbreite aufweist, die größer ist als die Frequenz des elektrischen Eingangssignals.

12. System nach Anspruch 10 oder 11, **dadurch gekennzeichnet, dass** der Analog-Digital-Wandler eine analoge Bandbreite aufweist, die größer ist als 10 MHz.

13. System nach einem der Ansprüche 10 bis 12, **dadurch gekennzeichnet, dass** das elektrische Eingangssignal eine Frequenz von 0,5 bis 5 MHz aufweist.

## Revendications

1. Procédé pour l'échantillonnage d'un signal ultrasonore, dans lequel deux transducteurs ultrasonores (2, 3) sont agencés dans un trajet de fluide afin d'émettre des signaux ultrasonores l'un vers l'autre et de recevoir des signaux ultrasonores l'un en provenance de l'autre, et dans lequel une unité de commande (4) est conçue pour envoyer des signaux électriques à chacun des transducteurs ultrasonores (2, 3) pour être transformés en signaux ultrasonores, et dans lequel l'unité de commande (4) est conçue pour recevoir des signaux électriques en provenance des deux transducteurs ultrasonores (2, 3) transformés à partir de signaux ultrasonores, et dans lequel l'unité de commande (4) comprend un convertisseur analogique-numérique pour convertir des signaux électriques provenant des transducteurs ultrasonores (2, 3), le procédé comportant les étapes consistant à :
a) envoyer un signal électrique d'entrée en provenance de l'unité de commande (4) vers un premier transducteur ultrasonore (2), transformer le signal électrique d'entrée en signal ultrasonore et l'envoyer vers un second transducteur ultrasonore (3) par l'intermédiaire du trajet de flux,
b) transformer le signal ultrasonore reçu au niveau du second transducteur ultrasonore (3) en un signal électrique de sortie qui est envoyé à l'unité de commande (4),
c) échantillonner le signal électrique de sortie reçu au niveau de l'unité de commande vers une série d'échantillons numériques à une fréquence d'échantillonnage,
d) répéter les étapes a) à c) au moins une fois avec le même signal électrique d'entrée électrique, **caractérisé en ce que** dans l'étape c), le moment du début de l'échantillonnage mesuré à partir du moment du début du signal électrique d'entrée respectif et/ou de la fréquence d'échantillonnage est différent de l'échantillonnage précédent,
e) combiner les séries d'échantillons obtenues afin d'obtenir un signal de sortie numérique combiné.

2. Procédé selon la revendication 1, dans lequel la fréquence d'échantillonnage pour chaque échantillonnage est la même.

3. Procédé selon la revendication 1 ou 2, dans lequel la différence du moment du début de l'échantillonnage de chaque série d'échantillons ultérieure est 1/(N·fs), où N est le nombre de séries d'échantillons réalisées et fs est la fréquence d'échantillonnage.

4. Procédé selon l'une quelconque des revendications 1 à 3, dans lequel le nombre d'échantillons dans chaque série d'échantillons est plus grand que la durée du signal de réception multipliée par la fréquence d'échantillonnage respective de la série d'échantillons.

5. Procédé selon l'une quelconque des revendications 1 à 4, dans lequel la fréquence d'échantillonnage pour toutes les séries d'échantillons est inférieure à la fréquence de Nyquist du signal électrique d'entrée.

6. Procédé selon l'une quelconque des revendications 1 à 5, dans lequel le signal de sortie numérique combiné est comparé au signal électrique d'entrée dans le but de détecter un trajet de signal défectueux entre les transducteurs ultrasonores (2, 3) et l'unité de commande (4).

7. Procédé selon l'une quelconque des revendications 1 à 6, dans lequel les étapes a) à e) sont répétées dans la direction de signal opposée, dans lequel les deux signaux de sortie numériques combinés ainsi obtenus sont comparés.

8. Procédé selon la revendication 7, dans lequel la vitesse de flux du fluide est calculée à partir de la différence des deux signaux de sortie numériques combinés.

9. Procédé selon l'une quelconque des revendications 1 à 8, dans lequel le signal d'émission est échantillonné numériquement au moins deux fois, dans lequel dans chaque répétition de l'échantillonnage du signal d'émission, le moment du début de l'échantillonnage mesuré à partir du moment du début du signal d'émission respectif et/ou de la fréquence d'échantillonnage est différent de l'échantillonnage précédent du signal d'émission, et les séries d'échantillons obtenues sont combinées pour obtenir un signal d'entrée numérique combiné.

10. Système permettant d'échantillonner un signal ultrasonore comprenant deux transducteurs ultrasonores (2, 3) qui sont agencés dans un trajet de fluide dans le but d'émettre des signaux ultrasonores l'un vers l'autre et de recevoir des signaux ultrasonores l'un en provenance de l'autre, et dans lequel l'unité de commande (4) est conçue pour envoyer des signaux électriques à chacun des transducteurs ultrasonores (2, 3) pour être transformés en signaux ultrasonores, et dans lequel l'unité de commande (4) est conçue pour recevoir des signaux électroniques en provenance des deux transducteurs ultrasonores transformés à partir de signaux ultrasonores, et dans lequel l'unité de commande comprend un convertisseur analogique-numérique pour convertir des signaux électriques reçus provenant des transducteurs ultrasonores (2, 3), **caractérisé en ce que** le système (1) est structuré et conçu pour exécuter le procédé selon l'une quelconque des revendications 1 à 9.

11. Système selon la revendication 10, **caractérisé en ce que** le convertisseur analogique-numérique présente une bande passante analogique qui est plus grande que la fréquence du signal électrique d'entrée.

12. Système selon la revendication 10 ou 11, **caractérisé en ce que** le convertisseur analogique-numérique présente une bande passante analogique qui est supérieure à 10 MHz.

13. Système selon l'une quelconque des revendications 10 à 12, **caractérisé en ce que** le signal d'entrée électrique a une fréquence de 0,5 à 5 MHz.
